# EUROPÄISCHE PATENTSCHRIFT

(11) **EP 2 812 647 B1**
(45) Veröffentlichungstag und Bekanntmachung des Hinweises auf die Patenterteilung: **29.05.2019**
(21) Anmeldenummer: 13703593.7
(22) Anmeldetag: 11.02.2013
(51) Int. Cl.: G01B 11/02, G01B 17/00, G01B 21/16

(54) **VERFAHREN UND ANORDNUNG ZUM VERMESSEN VON ABSTÄNDEN EINES SCHIENENFAHRZEUGS ZU SEITLICH DES SCHIENENFAHRZEUGS ANGEORDNETEN GEGENSTÄNDEN**
METHOD AND ARRANGEMENT FOR MEASUREMENT OF DISTANCES BETWEEN A RAIL VEHICLE AND OBJECTS ARRANGED TO THE SIDE OF THE RAIL VEHICLE
MÉTHODE ET DISPOSITIF DE MESURE DES ÉCARTS ENTRE UN VÉHICULE FERROVIAIRE ET DES OBJETS DISPOSÉS SUR LE CÔTÉ DU VÉHICULE FERROVIAIRE

(30) Priorität: 10.02.2012 DE 102012202068
(43) Veröffentlichungstag der Anmeldung: 17.12.2014
(73) Patentinhaber: Bombardier Transportation GmbH, 10785 Berlin (DE)
(72) Erfinder: BÖHM, Marian, 95349 Thurnau (DE); NETTER, Helmut, 47906 Kempen (DE); HARTER, Matthias, 01454 Radeberg (DE); ZECHEL, Gero, 01097 Dresden (DE)
(74) Vertreter: Patentanwälte Bressel und Partner mbB
(86) Internationale Anmeldenummer: PCT/EP2013/052683
(87) Internationale Veröffentlichungsnummer: WO 2013/117758

(56) Entgegenhaltungen:
- JP-A- 2002 145 064
- JP-A- 2004 117 166
- KR-A- 20100 086 740
- US-A1- 2007 233 322

## Beschreibung

Die Erfindung betrifft ein Verfahren zum Vermessen von Abständen eines Schienenfahrzeugs zu seitlich des Schienenfahrzeugs angeordneten Gegenständen. Die Erfindung betrifft ferner eine Anordnung zur Durchführung des Verfahrens.

Insbesondere beim erstmaligen Einsatz eines Schienenfahrzeug-Typs auf einem Schienenweg sind die seitlichen Abstände zu bestimmen und zu gewährleisten, dass während der Fahrt des Schienenfahrzeugs ausreichend Freiraum (auch als Lichtraum bezeichnet) zu den seitlich angeordneten Gegenständen verbleibt. Unter seitlich wird insbesondere die Richtung verstanden, die vom Schienenfahrzeug ausgesehen in horizontaler Richtung verläuft. Dabei ist der Abstand über die gesamte Höhe des Schienenfahrzeugs zu gewährleisten. Allgemeiner formuliert kann unter seitlich des Schienenfahrzeugs aber auch jede Richtung verstanden werden, die nicht in Fahrtrichtung verläuft.

In jüngerer Zeit wurde der barrierefreie Zugang zu Schienenfahrzeugen, insbesondere zu leichten Schienenfahrzeugen (wie Straßenbahnen), aber auch zu Regional- und Fernbahnzügen verbessert. Ein wichtiger Faktor ist dabei der Abstand zwischen einem Bahnsteig und dem daneben bereitstehenden Schienenfahrzeug. Ist die Lücke zwischen der Bahnsteigkante und dem Boden im Türbereich des Schienenfahrzeugs ausreichend klein und befinden sich die Höhenniveaus von Bahnsteig und Boden der Fahrgastzelle ungefähr auf dem gleichen Niveau, kann z.B. ein Rollstuhlfahrer ohne fremde Hilfe in das Schienenfahrzeug gelangen oder dieses verlassen. Bei geringen Abständen zwischen Fahrzeug und Bahnsteig besteht aber die Gefahr einer Kollision bzw. eines Kontakts zwischen dem Schienenfahrzeug und dem Bahnsteig, insbesondere wenn das Schienenfahrzeug mit verhältnismäßig hoher Geschwindigkeit neben dem Bahnsteig in die Halteposition einfährt. Es ist mit seitlichen Schwingungsbewegungen des Schienenfahrzeugs zu rechnen. Ein vorgegebener Sicherheitsabstand zwischen Schienenfahrzeug und Bahnsteig ist daher zu gewährleisten.

Abstands- bzw. Entfernungsmesseinrichtungen und deren Verwendung an speziellen Messfahrzeugen, die auf Schienenwegen betrieben werden können, sind an sich bekannt. Z.B. ist es bekannt, Messsysteme zu verwenden, die mit elektromagnetischer Strahlung oder Ultraschall berührungslos den Abstand bzw. die Entfernung messen.

JP 2002 145064 A beschreibt eine Einrichtung zum Detektieren von eindringenden Objekten in einen Schienenweg. Ein vorgegebenes abzubildendes Gebiet wird durch eine Weitwinkel-Abstandsmesseinrichtung abgebildet, wobei ein konischer Spiegel verwendet wird. Ein eindringendes Objekt wird auf der Basis eines Vergleichs zwischen einem Referenzbild und einem aktuellen Bild detektiert. Die Weitwinkel-Abstandsmesseinrichtungen sind an der unteren Oberfläche eines seitlich vorspringenden Bereichs und an der Bodenoberfläche an einer dem Bahnsteig gegenüberliegenden Seite der Strecke installiert.

US 2007/233322 A1 beschreibt eine kompakte Hybrid-Sensorvorrichtung zum Erzeugen von Signalen, die zum Führen eines Prozess-Roboters verwendbar sind.

JP 2004 117166 A beschreibt eine Entfernungs-Messeinrichtung und ein System, das die Einrichtung verwendet. Die Einrichtung sendet und empfängt Daten für die Entfernungsmessung, die eine Mehrzahl von Nullstellen haben und berechnet die Entfernung unter Verwendung des Zeitunterschieds zwischen dem Senden der Daten und dem Empfang der Daten, die von dem zu erfassenden Objekt zurückerhalten werden.

KR 2010 0086740 A beschreibt eine absenkbare Schutzvorrichtung zur Überbrückung der Lücke zwischen einem Bahnsteig und einem Schienenfahrzeug, wobei ein Positionssensor verwendet wird. Der Positionssensor misst den Abstand zwischen dem Bahnsteig und dem Zug. Wenn der gemessene Abstand größer als ein vorgegebener Wert ist, betätigt eine Steuerung einen Antriebsmotor, um die Schutzvorrichtung abzusenken.

GB 2 403 861 B beschreibt ein Verfahren und eine Anordnung zum Vermessen von Abständen eines Schienenfahrzeugs zu seitlich des Schienenfahrzeugs angeordneten Gegenständen mit einem Laser-Scanner.

Es ist eine Aufgabe der vorliegenden Erfindung, ein Verfahren zu Vermessen von Abständen eines Schienenfahrzeugs zu seitlich des Schienenfahrzeugs angeordneten Gegenständen, insbesondere einer Bahnsteigkante, anzugeben, das die Aufnahme von Messwerten während der Fahrt des Schienenfahrzeugs erlaubt und zuverlässig Messwerte in dicht aufeinanderfolgenden Positionen entlang der Fahrstrecke liefert. Es ist eine weitere Aufgabe der Erfindung, eine entsprechende Anordnung anzugeben.

Die Erfindung geht von dem Gedanken aus, dass es möglich sein soll, den seitlichen Abstand unter möglichst realistischen Bedingungen zu messen. Es soll daher insbesondere möglich sein, den Abstand während der Fahrt des Schienenfahrzeugs oder zumindest des Schienenfahrzeug-Typs zu messen, das bzw. der auf einer Fahrstrecke tatsächlich eingesetzt werden soll. Ferner soll die Messung bei den Geschwindigkeiten möglich sein, die das Fahrzeug beim praktischen Einsatz auf der Fahrstrecke tatsächlich erreicht bzw. mit der es fährt. Insbesondere bei Einfahrt in eine Haltestelle oder einen Bahnhof soll die Messung des Abstandes zum seitlich des Schienenfahrzeugs angeordneten Bahnsteig bei der tatsächlich in der Praxis vorkommenden Geschwindigkeit möglich sein. Z.B. kommt es vor, dass eine Straßenbahn jedenfalls zu Beginn der Einfahrt in eine Haltestelle mit einer Geschwindigkeit von ca. 30 km/h fährt. Bei einer Ausführungsform, die noch näher beschrieben werden wird, soll es möglich sein, bei dieser Geschwindigkeit Messpunkte des Abstandes für Fahrpositionen bzw. Positionen entlang der Bahnsteigkante zu ermitteln, die jeweils ca. 10 cm voneinander entfernt sind. Bei Anordnung des Messsystems in zurückgesetzter Position am Schienenfahrzeug unterhalb des Höhenniveaus des Fahrgastzellenbodens kommen dabei typischerweise Entfernungen zum seitlichen Rand des Bahnsteigs im Bereich von 20 bis 100 cm vor.

Dabei besteht die Problematik, dass es genaue Messsysteme gibt, die mit Ultraschall den Abstand messen (insbesondere durch Bestimmung der Laufzeit eines von dem UltraschallSender emittierten Signals, das von dem jeweiligen Gegenstand zurück reflektiert wird) und z.B. eine Genauigkeit von 3 mm absolut bzw. bei den genannten zu messenden Abständen von 1 bis 2 % relativ erreichen. Diese Messsysteme arbeiten jedoch bei verhältnismäßig geringen Messfrequenzen von etwa 6 bis 10 Hz, d.h. es werden lediglich 6 bis 10 Messwerte pro Sekunde aufgenommen. Die Frequenz ist insbesondere für die genannten Anforderungen an die Fahrgeschwindigkeit und die Dichte der Messpunkte entlang dem Fahrweg nicht ausreichend.

Darüber hinaus gibt es z.B. Messsysteme, die die Laufzeit eines von einem Lasersystem erzeugten Laser-Signals messen und eine geringere Genauigkeit als die genannten Ultraschallsysteme aufweisen. Jedoch ist die Messfrequenz der Lasersysteme deutlich höher und liegt z.B. im Bereich von 80 - 120 Hz, insbesondere 100 Hz. Die Genauigkeit ist jedoch insbesondere für die oben genannten Anforderungen nicht ausreichend.

Es wird daher vorgeschlagen, zwei Messsysteme, die sich in der Messfrequenz und der Genauigkeit unterscheiden, miteinander zu kombinieren und den Abstand des Schienenfahrzeugs zu seitlich des Schienenfahrzeugs angeordneten Gegenständen wiederholt und während desselben Messzeitraumes mit beiden Messsystemen zu messen. Insbesondere können mehrere solcher Kombinationen von zwei Messsystemen eingesetzt werden, d.h. zumindest zwei Kombinationen an verschiedenen Positionen in Fahrtrichtung des Schienenfahrzeugs angeordnet werden. Durch mehr als eine Kombination kann die Zuverlässigkeit des Messeergebnisses erhöht werden, optional zusätzlich die Fahrgeschwindigkeit ermittelt werden und der örtliche Messbereich erweitert werden (zum Beispiel am Ende eines Gleises).

Gemäß Anspruch 1 wird vorgeschlagen: Ein Verfahren zum Vermessen von Abständen eines Schienenfahrzeugs zu seitlich des Schienenfahrzeugs angeordneten Gegenständen, insbesondere einer Bahnsteigkante, während der Fahrt des Schienenfahrzeugs, wobei
- während der Fahrt wiederholt mittels eines ersten Messsystems, insbesondere eines Ultraschall-Messsystems, erste Messwerte des seitlichen Abstandes gemessen werden,
- während der Fahrt wiederholt mittels eines zweiten Messsystems, insbesondere eines Laser-Messsystems, zweite Messwerte des seitlichen Abstandes gemessen werden,
- die Genauigkeit des ersten Messsystems größer ist als des zweiten Messsystems, jedoch die Messfrequenz, d.h. die Frequenz der Aufnahme von Messwerten, des ersten Messsystems kleiner ist als des zweiten Messsystems,
- durch Kombination der ersten und zweiten Messwerte Abstandswerte berechnet werden, die den seitlichen Abstand des Schienenfahrzeugs in Abhängigkeit von der Zeit während der Fahrt und/oder in Abhängigkeit des Ortes auf der Fahrstrecke wiedergeben.

Ferner wird gemäß Anspruch 5 vorgeschlagen: Eine Anordnung zum Vermessen von Abständen eines Schienenfahrzeugs zu seitlich des Schienenfahrzeugs angeordneten Gegenständen, insbesondere einer Bahnsteigkante, während der Fahrt des Schienenfahrzeugs, wobei die Anordnung aufweist:
- ein erstes Messsystem, insbesondere ein Ultraschall-Messsystem, das ausgestaltet ist, während der Fahrt wiederholt erste Messwerte des seitlichen Abstandes zu messen,
- ein zweites Messsystem, insbesondere ein Laser-Messsystem, das ausgestaltet ist, während der Fahrt wiederholt zweite Messwerte des seitlichen Abstandes zu messen,
- eine Kombinationseinrichtung, die ausgestaltet ist, die ersten und zweiten Messwerte zu kombinieren und Abstandswerte zu berechnen, die den seitlichen Abstand des Schienenfahrzeugs in Abhängigkeit von der Zeit während der Fahrt und/oder in Abhängigkeit des Ortes auf der Fahrstrecke wiedergeben,
wobei das erste Messsystem und das zweite Messsystem mechanisch miteinander verbunden sind und an dem Schienenfahrzeug anordenbar sind und wobei die Genauigkeit des ersten Messsystems größer ist als des zweiten Messsystems, jedoch die Messfrequenz, d.h. die Frequenz der Aufnahme von Messwerten, des ersten Messsystems kleiner ist als des zweiten Messsystems.

Bei dem ersten Messsystem handelt es sich insbesondere um ein Ultraschall-Messsystem, z.B. ein Ultraschall-Messsystem mit den o.g. Eigenschaften. Bei dem zweiten Messsystem handelt es sich insbesondere um ein Laser-Messsystem, z.B. um das o.g. Laser-Messsystem, bei dem die Laufzeit des von dem seitlich angeordneten Gegenstand reflektierten Lasersignals gemessen wird.

Durch Kombination der ersten und zweiten Messwerte können die Vorteile des mit höherer Frequenz messenden zweiten Messsystems mit den Vorteilen des mit größerer Genauigkeit messenden ersten Messsystems kombiniert werden. Insbesondere kann z.B. bei plötzlicher Verringerung des Abstandes auf die Messwerte des zweiten Messsystems zurückgegriffen werden, da die Messwerte mit höherer Frequenz aufgezeichnet werden. Zwar wird der von dem zweiten Messsystem gemessene Abstand möglicherweise nicht genau genug bestimmt. Jedoch können die in der zeitlichen Reihe der Messwerterfassung nächst folgenden Messwerte des ersten Messsystems, die ebenfalls den geringeren Abstand wiedergeben, für eine genaue Bestimmung des verringerten Abstandes herangezogen werden. Entsprechendes gilt für sich plötzlich während der Fahrt des Schienenfahrzeugs vergrößernde Abstände.

Insbesondere erzeugen beide Messsysteme Messstrahlung, die von den Gegenständen seitlich des Schienenfahrzeugs reflektiert wird und jeweils von einem Sensor des Messsystems detektiert wird. Insbesondere sind die Messsysteme so positioniert und ausgerichtet, dass sie einen in einem vorgegebenen Abstand erwarteten Gegenstand an derselben Stelle seiner Oberfläche oder in einem Oberflächenbereich vorgegebener Größe erfassen, d.h. die an dieser Stelle der Oberfläche des Gegenstandes bzw. in diesem Oberflächenbereich des Gegenstandes reflektierte Messstrahlung wird von den Messsystemen ausgewertet. Z.B. erfassen beide Messsysteme den Abstand zu einem Oberflächenbereich, der nicht breiter als 15 cm, insbesondere 10 cm, und vorzugsweise 5 cm ist, d.h. die Punkte, die die Messstrahlung reflektieren, liegen nicht weiter auseinander. Insbesondere können die Messstrahlen, die von den beiden Messsystemen entlang einem geraden Ausbreitungsweg emittiert werden und von dem zu messenden Gegenstand reflektiert werden und von den Messsystemen detektiert werden, parallel zueinander verlaufen, und zwar in einem vorgegebenen Abstand z.B. kleiner als 5 cm und vorzugsweise kleiner als 2 cm.

Vorzugsweise sind die beiden Messsysteme während der Messung fest miteinander verbunden und relativ zueinander kalibriert, sodass die beiden Messsysteme im Rahmen ihrer jeweiligen Genauigkeit denselben Messwert des Abstandes zu dem seitlich des Schienenfahrzeugs angeordneten Gegenstand liefern.

Insbesondere können die beiden Messsysteme in einem gemeinsamen Gehäuse angeordnet sein, wobei in dem Gehäuse vorzugsweise zumindest ein gemeinsamer Datenspeicher angeordnet ist, in dem die ersten Messwerte und zweiten Messwerte abgespeichert werden. Die Kombinationseinrichtung zur Kombination der ersten und zweiten Messwerte kann in dem Gehäuse angeordnet sein oder separat sein. Z.B. ist es daher möglich, nach einer Fahrt des Fahrzeugs mit den am Fahrzeug angeordneten ersten und zweiten Messsystemen die in dem gemeinsamen Datenspeicher abgespeicherten Daten auszuwerten und dadurch zu kombinieren.

Wenn das erste Messsystem und das zweite Messsystem fest miteinander verbunden sind und insbesondere in einem gemeinsamen Gehäuse angeordnet sind, werden die beiden Messsysteme vorzugsweise von einer gemeinsamen elektrischen Energiequelle mit elektrischem Strom für ihren Betrieb versorgt, z.B. von einer Batterie oder einem anderen, insbesondere wieder aufladbaren, elektrischen Energiespeicher.

Dies erlaubt es insbesondere, die Messsysteme autark von der Energieversorgung des Fahrzeugs zu betreiben. Z.B. können die beiden Messsysteme daher temporär mit geringem Aufwand an einem Schienenfahrzeug angeordnet werden, um während der Fahrt des Schienenfahrzeugs Messwerte aufzunehmen.

Bei der Berechnung der Abstandswerte durch Kombination der ersten und zweiten Messwerte werden diese vorzugsweise mit unterschiedlich großen Gewichten gewichtet, um den Abstandswert festzulegen, der dem jeweiligen Zeitpunkt oder Ort während der Fahrt des Schienenfahrzeugs zugeordnet ist. Vorzugsweise sind die Gewichte für die Berechnung aller Abstandswerte, d.h. für jeden Zeitpunkt oder Ort während der Fahrt des Schienenfahrzeugs, gleich groß, wobei jedoch optional, wie im Folgenden noch beschrieben wird, unter bestimmten Bedingungen lediglich einer der Messwerte für die Berechnung eines Abstandswerts an einem bestimmten Ort oder zu einer bestimmten Zeit herangezogen werden kann. Wenn jedoch beide Messwerte für die Berechnung eines Abstandswertes herangezogen werden, sind die Gewichte vorzugsweise immer gleich groß. Im Fall der Verwendung eines Ultraschall-Messsystems als erstes Messsystem und eines Laser-Messsystems als zweites Messsystem haben sich folgende Verhältnisse der Gewichtungen bewährt: Der Ultraschall-Messwert (erster Messwert) geht mit einem Faktor 0,65 bis 0,95, insbesondere 0,7 bis 0,9 und z.B. 0,8, in die Berechnung des Abstandswertes ein, d.h. der erste Messwert wird mit diesem Faktor multipliziert und zu dem anderen, zweiten Messwert hinzuaddiert, der zuvor ebenfalls mit einem entsprechenden Faktor multipliziert wurde. Der entsprechende Faktor und der Faktor, mit dem der erste Messwert multipliziert werden, ergeben in der Summe 1. Allgemeiner formuliert ist das Gewicht des ersten Messwertes größer als das Gewicht des zweiten Messwertes. Dies trägt dem Umstand Rechnung, dass die Genauigkeit des ersten Messsystems größer ist als die Genauigkeit als des zweiten Messsystems.

Insbesondere können die beiden Messwerte als zeitliche Folge der während der Fahrt des Schienenfahrzeugs aufgezeichneten Messwerte gefiltert werden, um zeitliche Schwankungen zu glätten. Die Filterung wird vorzugsweise getrennt für den ersten Messwert und den zweiten Messwert vorgenommen, bevor die beiden Messwerte miteinander kombiniert werden, um einen gemeinsamen Abstandswert zu ermitteln.

In besonders bevorzugter Ausgestaltung ist oder wird ein Grenzwert für eine maximale Differenz zwischen dem ersten und dem zweiten Messwert vorgegeben, wobei bei der Kombination des ersten und zweiten Messwerts für einen zugeordneten Ort entlang der Fahrstrecke oder eine zugeordnete Zeit während der Fahrt lediglich der zweite Messwert für die Berechnung des Abstandswertes genutzt wird, wenn die Differenz des ersten und zweiten Messwerts größer ist als der vorgegebene Grenzwert und/oder zumindest gleich dem vorgegebenen Grenzwert ist. Eine bevorzugte Ausgestaltung der Anordnung weist eine Kombinationseinrichtung auf, die ausgestaltet ist, das Verfahren auszuführen.

Der vorgegebene Grenzwert liegt insbesondere im Bereich von 20 bis 70 mm, bevorzugt im Bereich von 30 bis 60 mm und insbesondere bei 45 mm.

Durch die Verwendung lediglich des zweiten Messwertes, der gemäß der höheren Messfrequenz des zweiten Messsystems aufgenommen wurde, wird bei plötzlicher Änderung des seitlichen Abstandes und daher bei Überschreiten des vorgegebenen Grenzwertes bzw. bei dessen Erreichen der erste Messwert außer Acht gelassen. Der Grund dafür liegt darin, dass bei der plötzlichen Änderung des Abstandes der erste Messwert wegen der geringeren Messfrequenz noch nicht den korrekten Abstand wiedergibt.

Die Kombination der beiden Messsysteme kann alternativ an einem speziellen Messfahrzeug montiert werden. Grundsätzlich ist es auch möglich, die beiden Messsysteme an einem Gegenstand seitlich des Schienenweges anzubringen und den Abstand zu dem vorbeifahrenden Schienenfahrzeug zu messen.

Ausführungsbeispiele der Erfindung werden nun unter Bezugnahme auf die beigefügte Zeichnung beschrieben. Die einzelnen Figuren der Zeichnung zeigen:
- Fig. 1: einen Querschnitt durch ein Schienenfahrzeug, an dem in einer gemeinsamen bautechnischen Einheit ein erstes und ein zweites Messsystem angeordnet sind, wobei die Figur auch einen Bahnsteig zeigt, dessen Abstand zu dem Schienenfahrzeug gemessen wird,
- Fig. 2: eine Vergrößerung eines Ausschnitts aus Fig. 1, der den Rand des Bahnsteigs und den Bereich des Schienenfahrzeugs zeigt, in dem die beiden Messsysteme angeordnet sind,
- Fig. 3: ein Ausführungsbeispiel für eine bautechnische Einheit mit einem ersten Messsystem und einem zweiten Messsystem, insbesondere die bautechnische Einheit, die in Fig. 1 und Fig. 2 dargestellt ist, und
- Fig. 4: ein Flussdiagramm zur Darstellung einer bevorzugten Ausführungsform des erfindungsgemäßen Verfahrens.

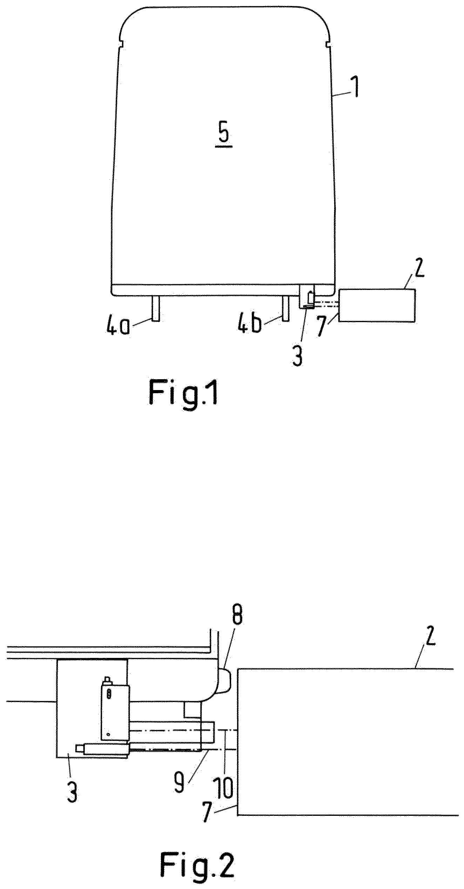

Fig. 1 zeigt ein Schienenfahrzeug 1, insbesondere eine Straßenbahn. Das Fahrzeug 1 fährt mit seinen Rädern 4a, 4b auf einem Abschnitt eines Schienenweges im Bereich einer Haltestelle oder einem Bahnhof. Seitlich des Schienenfahrzeugs 1 ist ein Teil eines Bahnsteigs 2 dargestellt, über den Fahrgäste in das Schienenfahrzeug 1 gelangen können oder über den die Fahrgäste das Schienenfahrzeug 1 verlassen können.

Unterhalb der Fahrgastzelle 5 des Schienenfahrzeugs 1, im Bereich unterflur des Wagenkastens, ist eine bautechnische Einheit 3 zur Messung des Abstandes des Schienenfahrzeugs 1 zu Gegenständen seitlich des Schienenfahrzeugs 1 und somit zu dem Bahnsteig 2 angeordnet. Wie Fig. 2 zeigt, ist die bautechnische Einheit 3 im Vergleich zu einer Außenkante des Schienenfahrzeugs 1, die durch einen Vorsprung 8 gebildet wird, zurückgesetzt angeordnet. Die durch die bautechnische Einheit 3 gemessenen Abstandswerte können nachträglich oder unmittelbar bei der Aufnahme der Abstandswerte um einen entsprechenden Offset-Wert korrigiert werden, so dass der gewünschte Abstand zwischen dem Schienenfahrzeug 1 und dem Bahnsteig 3 bzw. beliebigen Gegenständen seitlich des Schienenfahrzeugs 1 bestimmbar ist.

Wie Fig. 2 ferner zeigt, erzeugt die bautechnische Einheit 3 zwei Messstrahlen 9, 10. Die beiden Messstrahlen werden an der seitlichen Kante 7 des Bahnsteigs 3 reflektiert und von nicht näher dargestellten Sensoren in der bautechnischen Einheit 3 detektiert und ausgewertet.

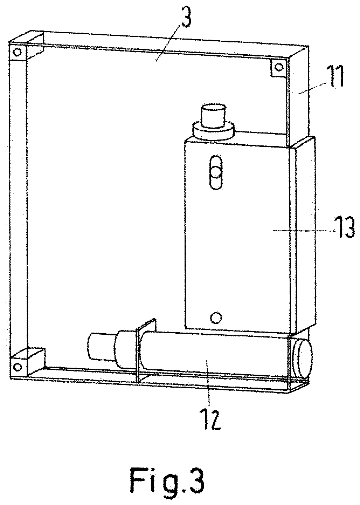

Die in Fig. 3 dargestellte bautechnische Einheit 3 weist z.B. ein Gehäuse 11 auf, in dem ein erstes Messsystem, nämlich ein Ultraschall-Messsystem 12, und ein zweites Messsystem, nämlich ein Laser-Messsystem 13, angeordnet sind. Dabei können die beiden Messsysteme 12, 13 insbesondere die in Fig. 2 dargestellten Messstrahlen 9, 10 erzeugen und aus der reflektierten Messstrahlung den Abstand zu seitlich des Schienenfahrzeugs angeordneten Gegenständen bestimmen. Außerdem kann sich innerhalb der bautechnischen Einheit 3 ein nicht dargestellter Datenspeicher befinden, der die von den Messsystemen 12, 13 erzeugten Messwerte laufend, entsprechend der Messfrequenz oder mit höherer Frequenz (z. B. mit ca. 1000 Hz) aufzeichnet. Z.B. geben die beiden Messsysteme 12, 13 jeweils einen analogen Spannungswert aus, der jeweils über einen Analog-/Digitalwandler in einen digitalen Wert umgewandelt wird, welcher nach einer optionalen Daten-Vorverarbeitung in dem Speicher abgespeichert werden kann.

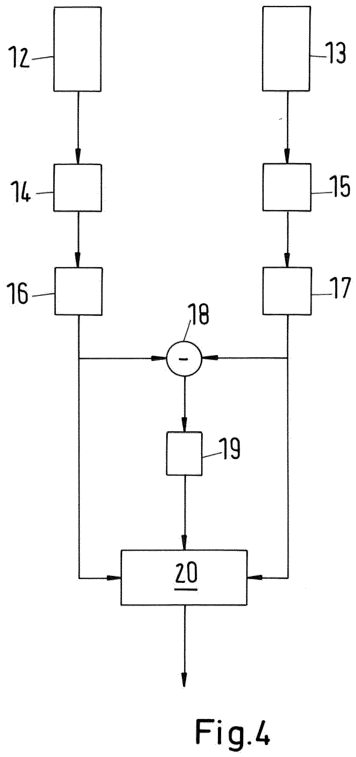

Fig. 4 zeigt ein Flussdiagramm zur Illustration eines bevorzugten Ausführungsbeispiels des Verfahrens.

Das erste Messsystem 12 und das zweite Messsystem 13 liefern jeweils wiederholt Messwerte des Abstandes, die die Systeme 12, 13 jeweils an eine nachgeordnete Berechnungseinrichtung 14, 15 zur Berechnung der Fahrposition des Fahrzeugs auf der Fahrstrecke ausgeben. Insbesondere kann die Berechnungseinrichtung 14, 15 die Fahrposition aus der Zeit der Messung des Abstandes und der zusätzlichen Information über die Fahrgeschwindigkeit berechnen. Die Fahrgeschwindigkeit wird (nicht in den Figuren dargestellt) z.B. von einem separaten Messsystem des Schienenfahrzeugs oder von einer zusätzlichen Einrichtung der Messanordnung gemessen und geliefert. Z.B. kann mit Hilfe einer so genannten IMU (Inertial Measurement Unit) laufend die Beschleunigung gemessen werden und durch Integration über die Zeit daraus die Geschwindigkeit berechnet werden.

Alternativ oder zusätzlich kann die Fahrgeschwindigkeit (dies gilt auch bei anderen Ausführungsformen der Erfindung, bei denen eine Umrechnung zwischen der Fahrposition und der Zeit der Messung unter Verwendung der Fahrgeschwindigkeit stattfindet) durch Nutzung von zumindest einem weiteren Messsystem zur Vermessung des seitlichen Abstandes des Schienenfahrzeugs zu dort angeordneten Gegenständen ermittelt werden. Insbesondere kann eine weitere bautechnische Einheit mit zwei weiteren Messsystemen vorgesehen sein, zum Beispiel wiederum einem Ultraschall-Messsystem und einem Laser-Messsystem. Diese bautechnische Einheit oder (allgemeiner formuliert) das zumindest eine weitere Messsystem ist vorzugsweise in Fahrtrichtung des Fahrzeugs von der ersten Kombination von Messsystemen (zum Beispiel Messsystem 12 und Messsystem 13) beabstandet. Das zumindest eine weitere Messsystem einerseits und die erste Kombination von Messsystemen andererseits messen daher während der Fahrt des Fahrzeugs in zeitlichem Abstand entsprechend ihrem örtlichen Abstand und entsprechend der Fahrgeschwindigkeit dieselben Messwerte des Abstandes zu seitlich des Schienenfahrzeugs angeordneten Gegenständen. Insbesondere durch Bestimmung der zeitlichen Korrelation der Messwerte der ersten Kombination von Messsystemen mit den Messwerten des zumindest einen weiteren Messsystems und unter Berücksichtigung des örtlichen Abstandes kann daher die Fahrgeschwindigkeit bestimmt werden.

Die Berechnungseinrichtungen 14, 15 geben das Ergebnis der Berechnung an eine nachgeordnete Filtereinrichtung 16, 17 aus, die zeitliche Schwankungen des Messsignals filtert und die z.B. einen Butterworth-Filter realisieren. Dabei findet lediglich eine Filterung der Abstandswerte statt, nicht der Werte der Fahrposition. Die Berechnungseinrichtungen 14, 15 und die Filtereinrichtungen 16, 17 sind optionale Einrichtungen. Sie können auch weggelassen werden und/oder in der Reihenfolge vertauscht werden, d.h. es kann zunächst die Filterung ausgeführt werden und dann die Berechnung der Fahrposition.

Die optional mit den Einrichtungen 14 bis 17 verarbeiteten und/oder ergänzten Informationen werden nun ausgegeben und die Abstandswerte des ersten Messsystems 12 und des zweiten Messsystems 13, die derselben Fahrposition oder demselben Zeitpunkt der Messung zuzuordnen sind, werden einer Subtraktionseinrichtung 18 zugeführt. Dabei kann die Subtraktion bei einer anderen Wiederholfrequenz ausgeführt werden als die Messungen des Abstandes oder zumindest als die Messung, die von einem der beiden Messsysteme durchgeführt wird. Die Subtraktionseinrichtung 18 kann daher insbesondere für die Abstandsmesswerte des ersten Messsystems zeitlich interpolierte Werte verarbeiten, die z.B. durch separate Interpolation oder aus den Ausgangssignalen der Filtereinrichtung gewonnen werden.

Vorzugsweise findet die Auswertung der Messwerte und damit auch insbesondere die Subtraktion bei einer Wiederholfrequenz statt, die größer ist als die Messfrequenz des Messsystems mit der höheren Messfrequenz. Zum Beispiel beträgt die Frequenz der Auswertung ca. 1000 Hz. Insbesondere kann das Ergebnis der Subtraktion gefiltert, das heißt geglättet werden, um den Effekt von Schwankungen der Messwerte (Rauschen) zu reduzieren.

Die Subtraktionseinrichtung 18 berechnet in jedem Arbeitstakt für einen Eingangswert des ersten Messsystems und einen Eingangswert des zweiten Messsystems (d.h. jeweils für einen an den Eingängen der Subtraktionseinrichtung eingegebenen Abstandswert) die Differenz der beiden Werte und gibt die Differenz an eine Vergleichseinrichtung 19 aus. Diese vergleicht die Differenz mit einem vorgegebenen Grenzwert und gibt bei Erreichen (erste Variante) oder bei Überschreiten des Grenzwertes (zweite Variante) ein Signal an eine nachgeordnete Kombinationseinrichtung 20 aus, die die Abstandswerte der beiden Messsysteme kombiniert. Abhängig von dem Signal der Vergleichseinrichtung 19 kombiniert die Kombinationseinrichtung 20 die beiden Abstandswerte, die ihr z.B. separat und vorzugsweise in gleicher Weise wie der Subtraktionseinrichtung 18 zugeführt werden. Wenn die Differenz der beiden Abstandswerte den vorgegebenen Grenzwert nicht erreicht oder nicht überschreitet, werden die beiden Abstandswerte miteinander kombiniert und es wird ein entsprechender kombinierter, insbesondere durch Gewichtung der Abstandswerte erhaltener Ergebnis-Abstandwert berechnet. Wenn die Differenz der beiden Abstandswerte dagegen den vorgegebenen Grenzwert erreicht oder ihn überschreitet, wird lediglich der Abstandswert des zweiten Messsystems als Ergebnis-Abstandswert ausgegeben.

Bei der Gewichtung des ersten und zweiten Eingangs-Abstandswertes (soweit diese Gewichtung durchgeführt wird) gewichtet die Kombinationseinrichtung den Eingangs-Abstandswert des ersten Messsystems 12 vorzugsweise mit einem Faktor 0,8 und gewichtet den Eingangs-Abstandswert des zweiten Messsystems mit einem Faktor 0,2. Nach der Gewichtung (d.h. nach der Multiplikation mit dem jeweiligen Faktor) werden die Ergebnisse (d.h. die Produkte) addiert und ergeben den Ergebnis-Abstandswert.

## Patentansprüche

1. Verfahren zum Vermessen von Abständen eines Schienenfahrzeugs zu seitlich des Schienenfahrzeugs (1) angeordneten Gegenständen, insbesondere einer Bahnsteigkante (7), während der Fahrt des Schienenfahrzeugs (1), wobei
- während der Fahrt wiederholt mittels eines ersten Messsystems (12) erste Messwerte des seitlichen Abstandes gemessen werden,
- während der Fahrt wiederholt mittels eines zweiten Messsystems (13) zweite Messwerte des seitlichen Abstandes gemessen werden,
- die Genauigkeit des ersten Messsystems (12) größer ist als des zweiten Messsystems (13), jedoch die Messfrequenz, d.h. die Frequenz der Aufnahme von Messwerten, des ersten Messsystems (12) kleiner ist als des zweiten Messsystems (13),
- durch Kombination der ersten und zweiten Messwerte Abstandswerte berechnet werden, die den seitlichen Abstand des Schienenfahrzeugs (1) in Abhängigkeit von der Zeit während der Fahrt und/oder in Abhängigkeit des Ortes auf der Fahrstrecke wiedergeben.

2. Verfahren nach Anspruch 1, wobei bei der Berechnung der Abstandswerte die ersten Messwerte und die zweiten Messwerte mit unterschiedlich großen Gewichten gewichtet werden und den Abstandswert festlegen, der dem jeweiligen Zeitpunkt oder Ort während der Fahrt zugeordnet ist.

3. Verfahren nach Anspruch 2, wobei das Gewicht des ersten Messwertes größer ist als des zweiten Messwertes.

4. Verfahren nach einem der vorhergehenden Ansprüche, wobei ein Grenzwert für eine maximale Differenz zwischen dem ersten und dem zweiten Messwert vorgegeben ist oder wird und wobei bei der Kombination des ersten und zweiten Messwerts für einen zugeordneten Ort oder eine zugeordnete Zeit während der Fahrt lediglich der zweite Messwert für die Berechnung des Abstandswertes genutzt wird, wenn die Differenz des ersten und zweiten Messwerts größer ist als der vorgegebene Grenzwert und/oder zumindest gleich dem vorgegebenen Grenzwert ist.

5. Anordnung zum Vermessen von Abständen eines Schienenfahrzeugs (1) zu seitlich des Schienenfahrzeugs (1) angeordneten Gegenständen, insbesondere einer Bahnsteigkante (7), während der Fahrt des Schienenfahrzeugs (1), wobei die Anordnung aufweist:
- ein erstes Messsystem (12), das ausgestaltet ist, während der Fahrt wiederholt erste Messwerte des seitlichen Abstandes zu messen,
- ein zweites Messsystem (13), das ausgestaltet ist, während der Fahrt wiederholt zweite Messwerte des seitlichen Abstandes zu messen,
- eine Kombinationseinrichtung (20), die ausgestaltet ist, die ersten und zweiten Messwerte zu kombinieren und Abstandswerte zu berechnen, die den seitlichen Abstand des Schienenfahrzeugs (1) in Abhängigkeit von der Zeit während der Fahrt und/oder in Abhängigkeit des Ortes auf der Fahrstrecke wiedergeben,
wobei das erste Messsystem (12) und das zweite Messsystem (13) mechanisch miteinander verbunden sind und an dem Schienenfahrzeug (1) anordenbar sind und wobei die Genauigkeit des ersten Messsystems (12) größer ist als des zweiten Messsystems (13), jedoch die Messfrequenz, d.h. die Frequenz der Aufnahme von Messwerten, des ersten Messsystems (12) kleiner ist als des zweiten Messsystems (13).

6. Anordnung nach Anspruch 5, wobei die Kombinationseinrichtung (20) ausgestaltet ist, bei der Berechnung der Abstandswerte die ersten Messwerte und die zweiten Messwerte mit unterschiedlich großen Gewichten zu gewichten und auf diese Weise den Abstandswert festzulegen, der dem jeweiligen Zeitpunkt oder Ort während der Fahrt zugeordnet ist.

7. Anordnung nach Anspruch 6, wobei das Gewicht des ersten Messwertes größer ist als des zweiten Messwertes.

8. Anordnung nach einem der vorhergehenden Ansprüche, wobei ein Grenzwert für eine maximale Differenz zwischen dem ersten und dem zweiten Messwert vorgegeben ist oder wird und wobei die Kombinationseinrichtung (20) ausgestaltet ist, bei der Kombination des ersten und zweiten Messwerts für einen zugeordneten Ort oder eine zugeordnete Zeit während der Fahrt lediglich den zweiten Messwert für die Berechnung des Abstandswertes nutzen, wenn die Differenz des ersten und zweiten Messwerts größer ist als der vorgegebene Grenzwert und/oder zumindest gleich dem vorgegebenen Grenzwert ist.

9. Schienenfahrzeug mit einer Anordnung nach einem der Ansprüche 5 bis 8, wobei das erste Messsystem und das zweite Messsystem an dem Schienenfahrzeug angeordnet sind.

## Claims

1. A method for measuring distances between a rail vehicle and articles arranged laterally to the rail vehicle (1), in particular a platform edge (7), during the travel of the rail vehicle (1), wherein:
during the travel, first measurement values of the lateral distance are repeatedly measured by means of a first measurement system (12),
during the travel, second measurement values of the lateral distance are repeatedly measured by means of a second measurement system (13),
the accuracy of the first measurement system (12) is greater than that of the second measurement system (13), but the measurement frequency, i.e., the frequency with which the measured values are recorded, of the first measurement system (12) is lower than that of the second measurement system (13),
by combining the first and second measurement values, distances are calculated that reflect the lateral distance of the rail vehicle (1) dependent on the time during the travel and/or on the location on the traveled route.

2. The method according to claim 1, wherein during the calculation of the distance values the first measurement values and the second measurement values are weighted with weights of different magnitude and determine the distance value that is associated with the specific point in time or location during the travel.

3. The method according to claim 2, wherein the weight of the first measurement value is greater than that of the second measurement value.

4. The method according to any of the preceding claims, wherein a limit value has been or is prespecified for a maximum difference between the first and the second measurement value and wherein when the first measurement value and second measurement value for an associated location or an associated time during the travel are combined, only the second measurement value is used for calculating the distance if the difference between the first measurement value and the second measurement value is greater than the prespecified limit value and/or is at least equal to the prespecified limit value.

5. An arrangement for measuring distances between a rail vehicle (1) and articles arranged laterally to the rail vehicle (1), in particular a platform edge (7), during the travel of the rail vehicle (1), wherein the arrangement comprises:
a first measurement system (12) that is designed to repeatedly measure first measurement values of the lateral distance during the travel,
a second measurement system (13) that is designed to repeatedly measure second measurement values of the lateral distance during the travel,
a combinatorial device (20) that is designed to combine the first and second measurement values and to calculate distances that reflect the lateral distance of the rail vehicle (1) dependent on the time during the travel and/or on the location on the traveled route,
wherein the first measurement system (12) and the second measurement system (13) are mechanically connected to one another and may be arranged on the rail vehicle (1) and wherein the accuracy of the first measurement system (12) is greater than that of the second measurement system (13), but the measurement frequency, i.e. the frequency with which the measured values are recorded, of the first measurement system (12) is lower than that of the second measurement system (13).

6. The arrangement according to claim 5, wherein the combinatorial device (20) is designed, when calculating the distances, to weight the first measurement values and the second measurement values with weights of different magnitude and in this manner to determine the distance value that is associated with the specific point in time or location during the travel.

7. The arrangement according to claim 6, wherein the weight of the first measurement value is greater than that of the second measurement value.

8. The arrangement according to any of the preceding claims, wherein a limit value has been or is prespecified for a maximum difference between the first and the second measurement value and wherein the combinatorial device (20) is designed, when the first and second measurement values are combined for an associated location or an associated time during the travel, to use only the second measured value for calculating the distance value if the difference between the first measurement value and the second measurement value is greater than the prespecified limit value and/or is at least equal to the prespecified limit value.

9. A rail vehicle comprising an arrangement according to any of claims 5 through 8, wherein the first measurement system and the second measurement system are arranged on the rail vehicle.

## Revendications

1. Procédé de mesure d'écarts entre un véhicule ferroviaire et des objets disposés sur le côté du véhicule ferroviaire (1), en particulier une bordure de quai (7), durant la marche du véhicule ferroviaire (1), dans lequel
- durant la marche, des premières valeurs de mesure de l'écart latéral sont mesurées à maintes reprises au moyen d'un premier système de mesure (12),
- durant la marche, des secondes valeurs de mesure de l'écart latéral sont mesurées à maintes reprises au moyen d'un second système de mesure (13),
- la précision du premier système de mesure (12) est plus grande que celle du second système de mesure (13), mais la fréquence des mesures, c'est-à-dire la fréquence de l'enregistrement de valeurs de mesure, du premier système de mesure (12) est plus petite que celle du second système de mesure (13),
- par combinaison des premières et secondes valeurs de mesure sont calculées des valeurs d'écart qui donnent l'écart latéral du véhicule ferroviaire (1) en fonction du temps durant la marche et/ou en fonction du lieu sur le parcours.

2. Procédé selon la revendication 1, dans lequel, lors du calcul des valeurs d'écart, les premières valeurs de mesure et les secondes valeurs de mesure sont pondérées avec des poids de grandeur différente et déterminent la valeur d'écart qui est associée durant la marche respectivement à l'instant ou au lieu.

3. Procédé selon la revendication 2, dans lequel le poids des premières valeurs de mesure est plus grand que celui des secondes valeurs de mesure.

4. Procédé selon l'une quelconque des revendications précédentes, dans lequel une valeur limite est ou sera prédéfinie pour une différence maximale entre la première et la seconde valeur de mesure, et dans lequel, lors de la combinaison des première et seconde valeurs de mesure pour un lieu associé ou un instant associé durant la marche, uniquement la seconde valeur de mesure est utilisée pour le calcul de la valeur d'écart lorsque la différence de la première et de la seconde valeur de mesure est plus grande que la valeur limite prédéfinie et/ou au moins égale à la valeur limite prédéfinie.

5. Dispositif de mesure d'écarts entre un véhicule ferroviaire (1) et des objets disposés sur le côté du véhicule ferroviaire (1), en particulier une bordure de quai (7), durant la marche du véhicule ferroviaire (1), dans lequel le dispositif présente :
- un premier système de mesure (12) qui est conçu pour mesurer à maintes reprises des premières valeurs de mesure de l'écart latéral durant la marche,
- un second système de mesure (13) qui est conçu pour mesurer à maintes reprises des secondes valeurs de mesure de l'écart latéral durant la marche,
- un appareil de combinaison (20) qui est conçu pour combiner les premières et secondes valeurs de mesure et pour calculer des valeurs d'écart qui donnent l'écart latéral du véhicule ferroviaire (1) en fonction du temps durant la marche et/ou en fonction du lieu sur le parcours,
dans lequel le premier système de mesure (12) et le second système de mesure (13) sont reliés mécaniquement l'un à l'autre et peuvent être disposés au niveau du véhicule ferroviaire (1) et dans lequel la précision du premier système de mesure (12) est plus grande que celle du second système de mesure (13), mais la fréquence des mesures, c'est-à-dire la fréquence de l'enregistrement de valeurs de mesure, du premier système de mesure (12) est plus petite que celle du second système de mesure (13).

6. Dispositif selon la revendication 5, dans lequel l'appareil de combinaison (20) est conçu pour, lors du calcul des valeurs d'écart, calculer les premières valeurs de mesure et les secondes valeurs de mesure avec des poids de grandeur différente et déterminer de cette façon la valeur d'écart qui est associée respectivement à l'instant ou au lieu durant la marche.

7. Dispositif selon la revendication 6, dans lequel le poids de la première valeur de mesure est plus grand que celui de la seconde valeur de mesure.

8. Dispositif selon l'une quelconque des revendications précédentes, dans lequel une valeur limite pour une différence maximale entre la première et la seconde valeur de mesure est ou sera prédéfinie et dans lequel le dispositif de combinaison (20) est conçu pour, lors de la combinaison de la première et de la seconde valeur de mesure pour un lieu associé ou un temps associé durant la marche, utiliser uniquement la seconde valeur de mesure pour le calcul de la valeur d'écart lorsque la différence de la première et de la seconde valeur de mesure est plus grande que la valeur limite prédéfinie et/ou au moins égale à la valeur limite prédéfinie.

9. Véhicule ferroviaire avec un dispositif selon l'une quelconque des revendications 5 à 8, dans lequel le premier système de mesure et le second système de mesure sont disposés au niveau du véhicule ferroviaire.
